# EUROPEAN PATENT APPLICATION

(11) **EP 4 726 629 A1**
(43) Date of publication of application: **15.04.2026**
(21) Application number: 25205455.6
(22) Date of filing: 29.09.2025
(51) Int. Cl.: G06Q 20/32, G06Q 20/34, G07F 17/32

(54) **SYSTEM AND METHOD TO ENABLE CASHLESS REDEMPTION OF LOTTERY TICKETS BY PLAYERS IN A LOTTERY GAME**

(30) Priority: 09.10.2024 US 202418910456
(71) Applicant: Scientific Games, LLC, Alpharetta, GA 30004 (US)
(72) Inventor: Fulton, Joseph Corry, Alpharetta, 30004 (US); Waldron, Aaron Kelly, Alpharetta, 30004 (US); Anderson, O Ryan, Alpharetta, 30004 (US)
(74) Representative: Canzler & Bergmeier Patentanwälte Partnerschaft mbB

(57) **Abstract**

A system and method enable redemption of lottery tickets by players in a lottery game. A plurality of lottery tickets are provided for play in the lottery game, wherein a player presents a winning lottery ticket from the plurality of lottery tickets for redemption of a prize assigned to the winning lottery ticket. A bearer card is generated and provided to the player, the bearer card having a value equal to the prize assigned to the winning lottery ticket. A virtual debit card is created and loaded with a value equal to the value of the bearer card, the virtual debit card provided to the player upon presentation of the bearer card by the player. The player can purchase goods or services charged against the virtual debit card up to the value of the virtual debit card.

## Description

### FIELD OF THE INVENTION

The present invention relates to a system and method for cashless redemption and payout for winning lottery tickets.

### BACKGROUND

Lottery games have become a time honored method of raising revenue for state and federal governments the world over. The success of these games, however, depends on continuous innovations that capture the interests of current players, draw new players to the games, and motivate third party vendors and retail establishments to sell lottery tickets.

As with other consumers, lottery players are becoming more tech savvy and are interested in conducting various gaming aspects via electronic devices, such as smart phones or other smart electronic devices. The gaming industry is appreciative of this fact and is seeking ways to integrate games and gaming-related functions into the rapidly developing mobile electronic communication age.

With conventional systems and methods, authorized retail vendors within a lottery jurisdiction have been the primary means of lottery ticket sales and redemption of cash prizes for winning lottery tickets up to a certain amount. Prizes in excess of this amount typically must be redeemed at a lottery redemption center.

An ongoing issue with the conventional payout systems and methods is that lottery retailers commonly struggle to maintain on-hand cash sufficient to pay winners. When this occurs, the retailer has no other option than to turn the player away, resulting in the player visiting a different retailer for their payout. This situation results in the loss of potentially valuable foot traffic and additional purchases to the original retailer.

Also, with the conventional in-store cash redemption systems/methods, the lottery jurisdictions and lottery providers have little or no opportunity to influence downstream spending of the lottery proceeds by the player.

It would thus be beneficial to the lottery industry to develop a redemption system and method that alleviates the burden for retailers to maintain sufficient cash on hand for lottery ticket payouts, would encourage foot traffic and additional spending by players at the retailers, and would enable the lottery jurisdiction and/or lottery provider to influence or encourage spending of lottery proceeds at the retailers or other third parties partnered with the lottery jurisdiction.

### SUMMARY OF THE INVENTION

Objects and advantages of the invention will be set forth in part in the following description, or may be obvious from the description, or may be learned through practice of the invention.

In particular embodiments, a system and method are provided for redemption of lottery tickets by players in a lottery game. The system and method enable a player to present a winning lottery ticket in the lottery game for redemption of a cash prize. A bearer card is created and provided to the player, the bearer card having a value at least equal to the cash prize assigned to the winning lottery ticket. Upon the player subsequently presenting the bearer card, a virtual debit card is issued to the player, the virtual debit card loaded with a value equal to the value of the bearer card. The player can purchase goods or services from a provider of their choice that are charged against the virtual debit card up to the value of the virtual debit card.

In a particular embodiment, the lottery tickets are printed or virtual scratch-off lottery tickets. The lottery tickets may also be instant-pay (fast-play) tickets or drawn-game tickets.

The bearer card may be transferred by the player to a third party of their choice, wherein the third party can present the bearer card and the virtual debit card is issued to the third party.

In some embodiments, the bearer card is a printed bearer card having a code thereon, such as a QR code, bar code, or other type of scannable code. The player may subsequently scan the code with an electronic smart device (e.g., a mobile phone), wherein the virtual debit card is created and stored on the electronic smart device.

In other embodiments, the player may present multiple winning lottery tickets for redemption at the same time, wherein the bearer card has a value equal to a total of the prizes assigned to the multiple winning lottery tickets.

Embodiments of the method and system may include providing a personalized digital account for the player that indicates a running balance of an amount remaining on the virtual debit card. With this embodiment, the virtual debit card may be sponsored by a third-party financial services provider (e.g., a Mastercard^{™} or Visa^{™} provider) and the personalized digital account may be enabled by a mobile application provided by a lottery provider, wherein the mobile application is linked to the third-party financial services provider. Additionally, the mobile application may be configured to generate a lottery-specific code that is linked to the virtual debit card, wherein this lottery-specific code enables the player to purchase additional lottery tickets that are charged directly against the virtual debit card by presenting the lottery-specific code at time of purchase of the additional lottery tickets.

Embodiments of the system and method may include providing the player with an incentive to use the mobile application and the lottery-specific code to purchase the additional lottery tickets. For example, the player may be awarded points in a loyalty program for purchasing the additional lottery tickets.

### BRIEF DESCRIPTION OF THE DRAWINGS

A full and enabling description of the present invention is provided herein, with reference to particular embodiments depicted in the attached drawings and described below:
Fig. 1 depicts an example of a conventional lottery ticket, specifically a scratch-off lottery ticket, for play in the system and method of the present invention;
Fig. 2 is a flow chart of a method embodiment in accordance with aspects of the invention;
Fig. 3 depicts a lottery ticket kiosk and issuance of a virtual bearer card;
Fig. 4 depicts a virtual bearer card loaded onto a mobile smart device;
Fig. 5 depicts instructions to a player to link a virtual bearer card to virtual debit card via a state-sponsored mobile lottery app;
Figs. 6 and 7 depict steps for linking the virtual bearer card and the virtual debit card to the mobile app;
Fig. 8 depicts generation of a lottery-specific code from the mobile app for purchase of additional lottery products charged against the virtual debit card;
Fig. 9 depicts an accounting of the additional lottery products against the balance of the virtual debit card;
Fig. 10 depicts instructions on the mobile smart device for the player to make purchases of third-party goods or services using the virtual debit card; and
Fig. 11 depicts an accounting of the additional goods or services against the balance of the virtual debit card.

### DETAILED DESCRIPTION

Reference will now be made in detail to embodiments of the inventive methods and systems, one or more examples of which are illustrated in the drawings. Each embodiment is presented by way of explanation of the invention, and not as a limitation of the invention. For example, features illustrated or described as part of one embodiment may be used with another embodiment to yield still a further embodiment. It is intended that the present invention include these and other modifications and variations as come within the scope and spirit of the invention.

For sake of example only, the following discussion relates to embodiments of the invention drawn to lottery games, including primary games, bonus games, and second chance games sponsored by state or other jurisdictional lottery authorities and implemented by a third-party lottery provider wherein cash prizes are awarded in the games. It should be appreciated, however, that the system and method are just as applicable to gaming activities linked to any manner of other gaming authority, such as games conducted within a gaming establishment (e.g., a casino) for patrons of such establishment, or electronic games conducted via an electronic network, such as the internet, for authorized players.

The present disclosure makes reference to scratch-off lottery tickets for purposes of explaining aspects of the invention. It should be appreciated, however, that the invention is not limited to scratch-off lottery tickets. The game system and method presented herein may be played with any manner of paper or electronic lottery tickets (e.g., quick-pick or draw tickets). The tickets may be printed paper tickets, or may be electronically simulated tickets that are transmitted to and played by the player via an application running on a smart device, such as a mobile phone, tablet, computer, etc.

The system and method of the present invention may include a partnership between the lottery jurisdiction and a lottery party, as described below. The lottery provider is generally understood to be a party that manages and implements the lottery game for a specific jurisdiction (e.g., a state or other government entity). An example of a lottery provider is Scientific Games having a principal place of business in Alpharetta, GA, USA. The lottery provider supplies the lottery tickets 10 for play of the game 56 and implement the various functionalities and lottery machines or devices discussed herein as part of its services for the jurisdiction.

Embodiments of the method and system may also include a partnership between the lottery jurisdiction and/or lottery provider and a third-party financial services provider (e.g., Galileo Financial Technologies) that sponsors or otherwise provides the virtual debit cards described herein and interfaces with the lottery provider to carry out and account for the various charges made against the card and reported on the player's digital lottery account. The third-party financial services provider may provide card services including payment processing, and may be connected with payment networks (e.g., Visa^{™}, Mastercard^{™}) and contracted with banking institutions in order to create card products, process transactions, hold funds (bank), keep transaction data, and provide reporting.

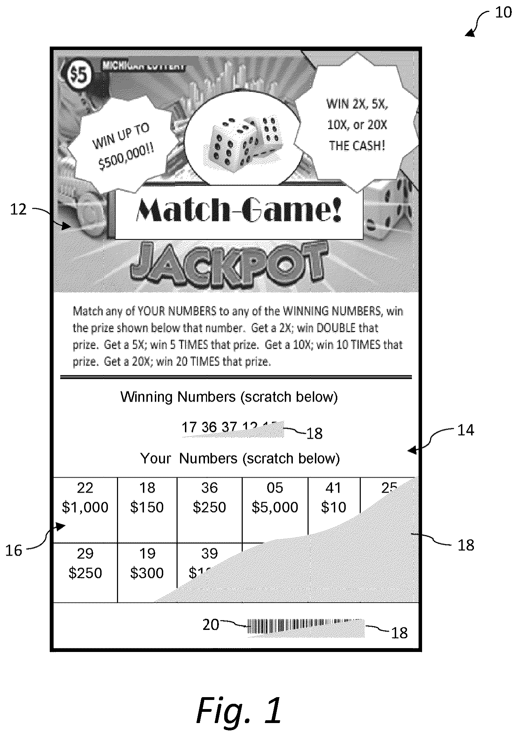

Fig. 1 depicts a conventional scratch-off lottery ticket 10 having a game play area 14 wherein variable game play indicia 16 is provided and covered by a scratch-off coating (SOC) layer 18. In order to reveal the winning or losing status of the ticket 10, the player removes the SOC layer 18 to uncover the underlying game play indicia 16. Thus, the game play indicia 16 is "variable" indicia in that it changes from one ticket 10 to another. In the depicted game, the ticket 10 presents a series of "Winning Numbers" in the game play area 14 covered by the SOC layer 18. A matrix of "Your Numbers" is provided below the "Winning Numbers" in the game player area 14.

The ticket 10 includes game instruction graphics and indicia 12 printed thereon that explain to a player how to play the game embodied on the ticket 10, as well as what constitutes a winning ticket and the prize amounts. The game instruction indicia 12 may be considered as "static" indicia in that, for a given common game, it does not change from one ticket 10 to the other. In Fig. 1A, the instructions 12 convey to the player that a match of any of the "Your Numbers" with any of the "Winning Numbers" wins the prize shown below the number, as well as other prize multipliers.

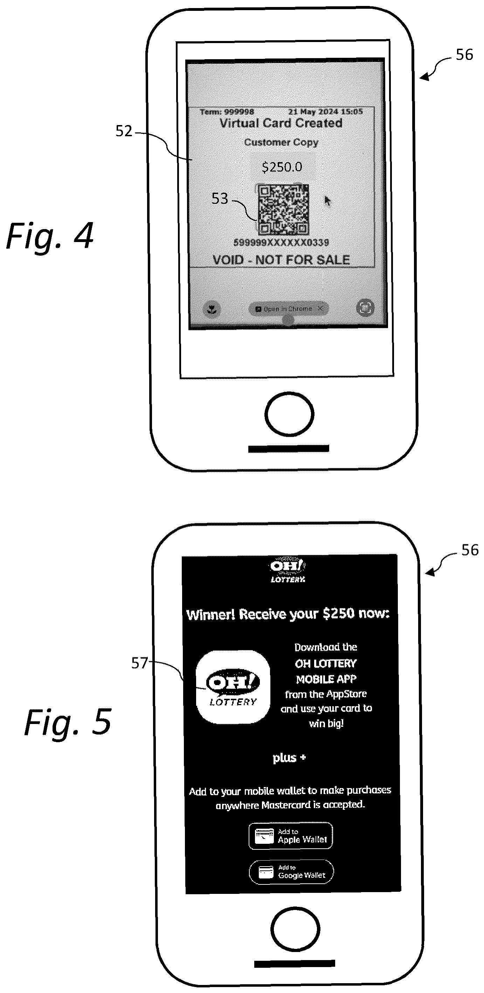

Each lottery ticket 10 may include a validation code 20 printed thereon, which may also be covered by a SOC layer 18, that links the ticket 10 to a validation file contained in a central server or computer system maintained by a lottery provider 53 (Fig. 4). Those skilled in the art appreciate that the validation file contains ticket-specific information for validation and pay-out (redemption) of the ticket 10, including whether or not the ticket 10 qualifies for a bonus or second chance game. When the tickets 10 are presented to a physical redemption center/location 44 for validation and redemption of the prize, a scanner can be used to read the code 20 for verifying (via the ticket-specific information contained in the respective validation file) whether the ticket 10 is a winning ticket and the prize associated with the ticket 10.

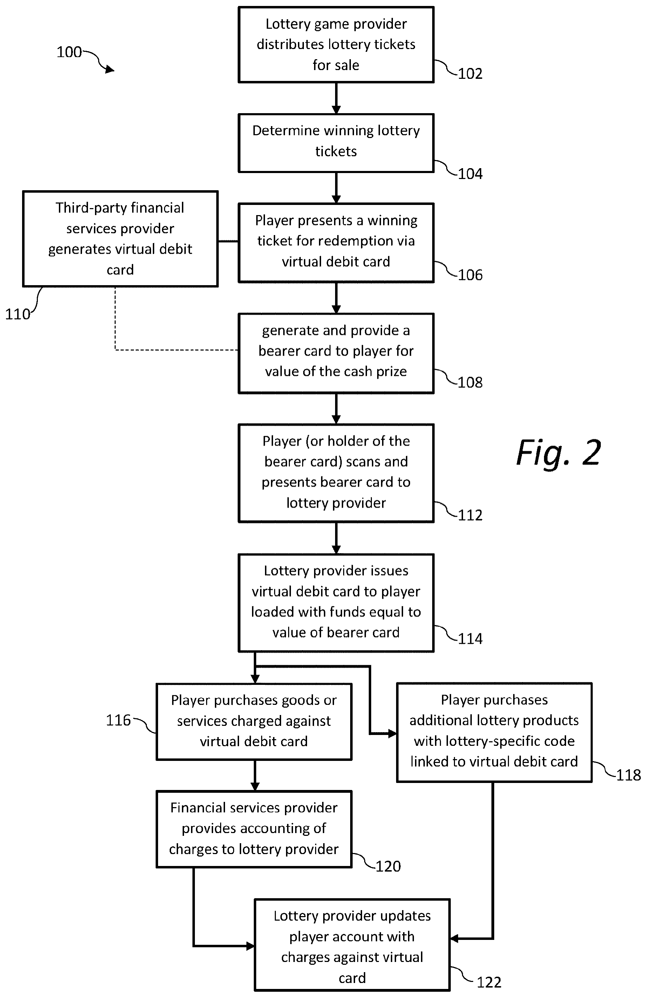

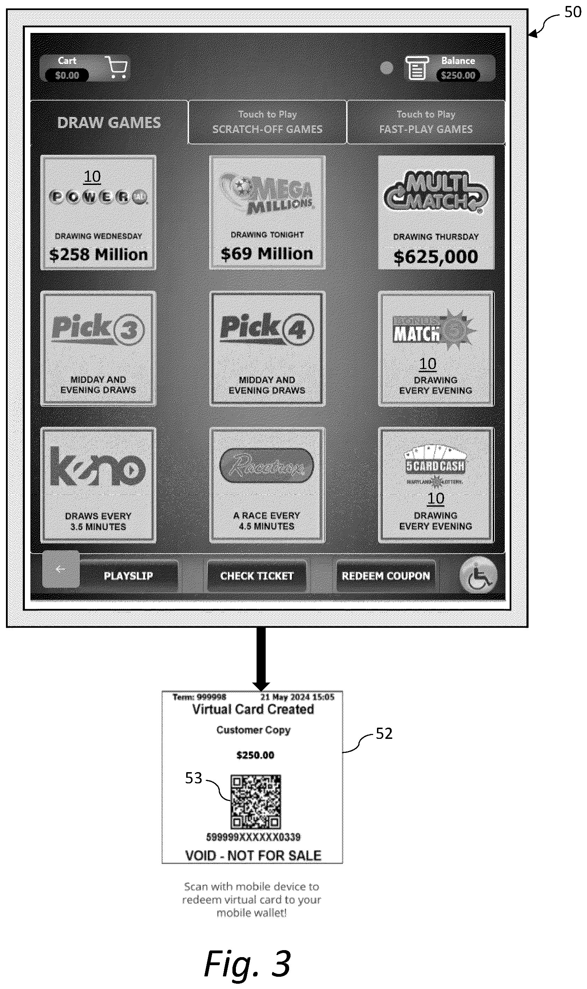

Fig. 2 is a diagram of system and method embodiments 100 for redemption of lottery tickets by players in a lottery game. The system and method 100 enable a player to present a winning lottery ticket 19 (Fig. 1) in the lottery game for redemption of a cash prize. In step 102, the lottery game provider (in partnership with a lottery jurisdiction) distributes the lottery tickets 10 for sale via any conventional means and locations. For example, the tickets 10 may be sold to players at authorized retail locations by a store clerk. In an alternate embodiment depicted in Fig. 3, a self-service lottery ticket kiosk 50 may be located at an authorized location and provides a system wherein players can interact directly with the kiosk 50 to purchase various types of lottery tickets 10. In yet another embodiment, digital lottery tickets 10 may be made available for purchase to players via a lottery website and downloaded directly to a player's smart mobile device (e.g., a smart phone, tablet) or computer.

Step 104 indicates that winning lottery tickets 10 in the game are determined by established rules/procedures. For example, the scratch-off ticket 10 depicted in Fig. 1 indicates that the ticket 10 is a winning ticket ( "36" is a matching winning number) with a cash value of $250.00. Other type of tickets 10 (e.g., draw or fast-play games) will have their respective procedures and rules for determining winning tickets 10.

At step 106, instructions are provided to the player to redeem winning tickets 10, for example at an authorized retail location if the prize award is less than an amount established by the lottery jurisdiction or lottery provider. For higher cash prizes, the player may be instructed to visit a lottery redemption center. For scratch-off lottery tickets 10, the validation code 20 will be scanned at time of redemption and is used by the lottery provider to determine if the ticket is a genuine winning ticket, as in understood in the industry. If the kiosk 50 is provided, the player may scan the validation code 20 directly at the kiosk 50.

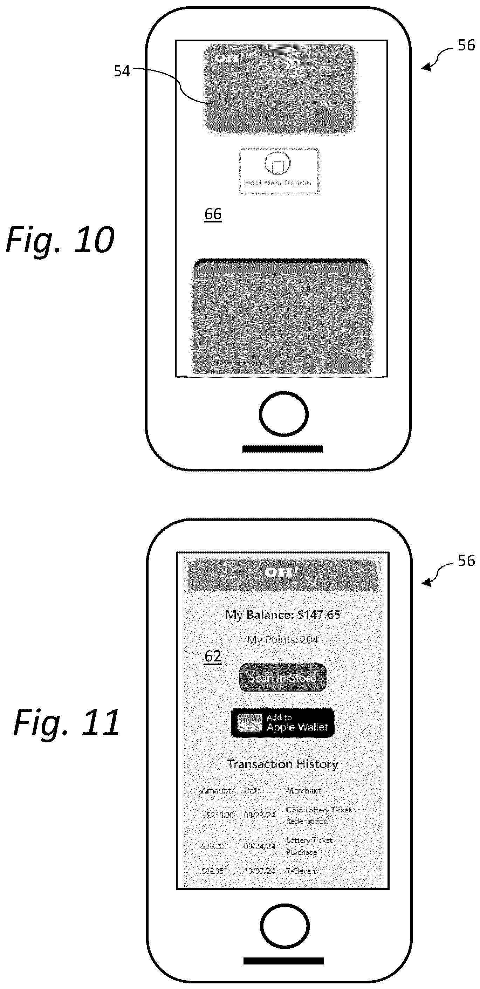

Step 108 indicates that a bearer card 52 (Fig. 3) is created and provided to the player. The bearer card 52 has a value equal to the cash prize assigned to the winning lottery ticket 10. If multiple winning tickets are presented for redemption at the same time, the bearer card 52 may have a value equal to the total cash prize from all of the winning lottery tickets 10. For example, in Fig. 3, the bearer card 52 has a value of $250 The card 52 is considered a "bearer card" in that it has a face value for the holder of the card 52. For example, the player may decide to transfer the bearer card 52 to a third party (e.g., a family member or friend), wherein the third party can present the bearer card 52 for issuance of the virtual debit card 54 (Fig. 10) to the third party (discussed below).

As depicted in Fig. 3, the bearer card 52 may be a printed bearer card having a code 53 thereon, such as a QR code, bar code, or other type of scannable code.

Step 110 indicates creation of the virtual debit card 54 by the third-party financial services provider (discussed above) partnered with the lottery provider and lottery jurisdiction, which may take place when the player presents the winning ticket for redemption via a virtual debit card at step 106. The virtual debit card 54 may be generated before the bearer card 52 is printed, for example at step 106 (indicated by the dashed line). Upon creation, the virtual debit card 54 is loaded with funds equal to the value of the bearer card 52.

At step 112, the player (or other holder of the bearer card 52) presents the bearer card 52 to the lottery provider for redemption and receipt of a virtual debit card 54 loaded with the cash value indicated on the bearer card 52 (step 112). The code 53 on the bearer card 52 is scanned to validate the card 52. For example, the player may scan the code 53 using their mobile device.

At step 114, the lottery provider issues the virtual debit card 54 to the player. For example, the mobile device may be directed to a page that provides instructions to the player to download the virtual debit card 54 to a wallet in their mobile smart device.

At step 116, the player may purchase goods or services using the virtual debit card 54 (up to the value of the card 54) in the same manner as any other debit or credit card stored on their mobile smart device.

Step 118 indicates that the player may also use the funds loaded on the virtual debit to purchase additional lottery products (e.g., additional lottery tickets via a kiosk 50) through a lottery-sponsored personalized digital account, as explained in greater detail below.

The player may be able to track the total remaining on the virtual debit card 54 and/or the charges posted against the virtual debit card 54 via their personalized digital account. Step 120 indicates that the third-party financial services provider provides an accounting of the charges to the lottery provider, wherein at Step 122 the player's personal account is updated with these charges and the charges for additional lottery products (Step 118).

Referring to Figs. 4 through 11, embodiments of the method and system 100 may be enabled via a player's smart device 56, such as a mobile phone, tablet, and so forth. Fig. 4 depicts a screen shot from the smart device 56 of the bearer card 52 discussed above after the player scanned the paper copy of the bearer card 52.

Referring to Fig. 5, by highlighting and entering the code 53, the player is given the choice to download or be directed to a lottery-sponsored mobile app site 57 where the player is prompted to add the virtual debit card for $250 directly to their lottery app wallet, or to simply add the virtual debit card 54 directly to one of the listed mobile wallets (e.g., Apple Wallet or Google Wallet). The lottery-sponsored mobile app may provide additional options or features linked to the virtual debit card such as balance, transaction history, and loyalty rewards.

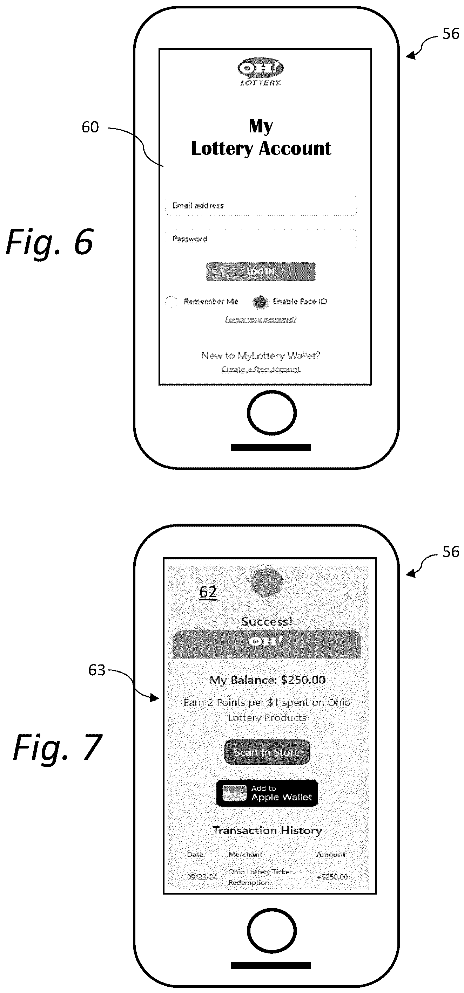

Fig. 6 depicts that the player has downloaded the mobile app and is given instructions 60 to log in to their personalized digital account or to set up such an account.

The screenshot in Fig. 7 indicates that the value ($250) of the virtual debit card has been added to the player's virtual debit card library in the personal account 62. The library may include an accounting for multiple virtual debit cards. An entry at the bottom of the screen indicates that the account was credited with the virtual debit card issued for redemption of the lottery ticket. The player is also given the option to add the virtual debit card to their digital wallet if not previously done. An additional option ("scan in store") is also provided wherein the player can purchase additional lottery products with the funds in the balance. An incentive 63 is offered for these additional lottery products. For example, the player is offered "2 points" in their account for each $1 spent on the additional lottery products. These points may be credited, e.g., to a loyalty program or other award program wherein the points may eventually be used to purchase goods or services from the lottery or another party. The incentive 63 may take on any form that entices players to purchase additional lottery products, such as a monetary award, points in an award program, discounts at vendor establishments, and so forth. The incentives 63 also tend to drive players to the retail establishments that sell lottery tickets, which is a valuable consideration for the retail establishments.

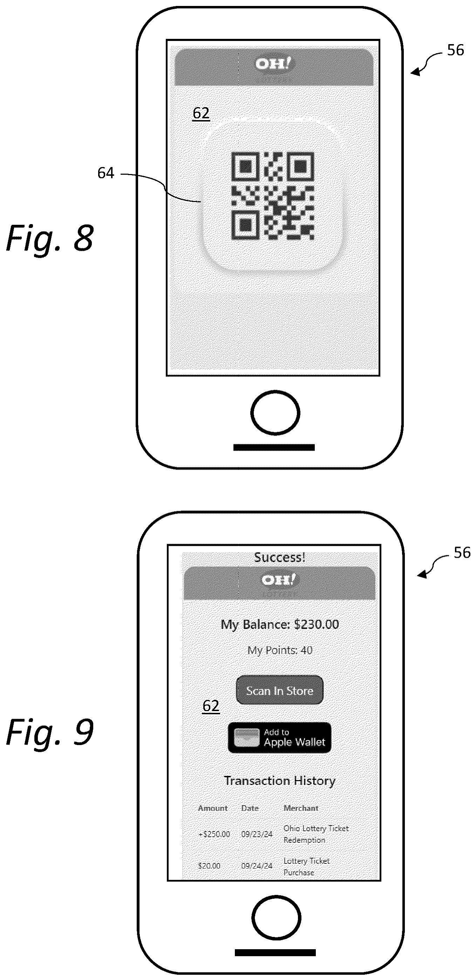

Fig. 8 depicts that the player has selected the "scan in store" option and a lottery-specific code 64 has been generated and displayed on the smart device 56. The code 64 is linked to the virtual debit card 54. The player can purchase the additional lottery products by presenting the code for scanning by a retail clerk or at a self-serve kiosk 50.

Fig. 9 depicts that the player purchased $20 worth of additional lottery products, as referenced by the accounting entry at the bottom of the screen. The $20 charge against the virtual debit card 54 was transmitted by the third-party financial services provider to the lottery provider in order to update the player's account balance.

Fig. 10 depicts the player's digital wallet with the virtual debit card 54 stored therein. It should be appreciated that the player may use the virtual debit card 54 for the purchase of any type of goods or services, including the purchase of additional lottery products by bypassing the personal account 62. However, purchases of additional lottery products directly from the wallet 66 will not be credited with the incentive points. The purchases of goods or services directly from the wallet 66 will be reflected in the balance and accounting entries of the player's personalized digital account 62, as reflected in Fig. 11.

It should be appreciated by those skilled in the art that various modifications and variations may be made present invention without departing from the scope and spirit of the invention. It is intended that the present invention include such modifications and variations as come within the scope of the appended claims.

## Claims

1. A method for redemption of lottery tickets by players in a lottery game, the method comprising:
enabling for a player to present a winning lottery ticket in the lottery game for redemption of a prize;
providing a bearer card to the player, the bearer card having a value at least equal to the prize assigned to the winning lottery ticket;
upon the player subsequently presenting the bearer card, issuing a virtual debit card to the player, the virtual debit card loaded with a value equal to the value of the bearer card, wherein the player can purchase goods or services charged against the virtual debit card up to the value of the virtual debit card.

2. The method according to claim 1, wherein the lottery tickets are scratch-off lottery tickets.

3. The method according to claim 1 or 2, wherein the bearer card is transferrable by the player to a third party, wherein the third party can present the bearer card and the virtual debit card is issued to the third party.

4. The method according to any one of claims 1 to 3, wherein the bearer card is a printed bearer card having a code thereon, wherein upon the player subsequently scanning the code with an electronic smart device, the virtual debit card is created and stored on the electronic smart device.

5. The method according to any one of claims 1 to 4, wherein multiple winning lottery tickets are presented by the player for redemption at the same time, the bearer card having a value equal to a total of the prizes assigned to the multiple winning lottery tickets.

6. The method according to any one of claims 1 to 5, comprising providing a personalized digital account for the player that indicates a running balance of an amount remaining on the virtual debit card.

7. The method according to claim 6, wherein the virtual debit card is sponsored by a third-party financial services provider and the personalized digital account is enabled by a mobile application provided by a lottery provider, the mobile application linked to the third-party financial services provider, wherein the mobile application is preferably configured to generate a code that is linked to the virtual debit card, wherein the code enables the player to purchase additional lottery tickets that are charged directly against the virtual debit card by presenting the code at time of purchase of the additional lottery tickets, wherein the player is preferably provided with an incentive to use the mobile application and the code to purchase the additional lottery tickets.

8. A system to enable redemption of lottery tickets, such as scratch-off lottery tickets, by players in a lottery game, the comprising:
a plurality of lottery tickets for play in the lottery game, wherein a player presents a winning lottery ticket from the plurality of lottery tickets for redemption of a prize assigned to the winning lottery ticket;
a bearer card generated and provided to the player, the bearer card having a value at least equal to the prize assigned to the winning lottery ticket;
a virtual debit card loaded with a value equal to the value of the bearer card, the virtual debit card generated and provided to the player upon presentation of the bearer card by the player; and
wherein the player can purchase goods or services charged against the virtual debit card up to the value of the virtual debit card.

9. The system according to claim 8, wherein the bearer card is transferrable by the player to a third party, wherein the third party can present the bearer card and the virtual debit card is issued to the third party.

10. The system according to claim 8 or 9, wherein the bearer card comprises a printed bearer card having a code thereon, wherein upon the player subsequently scanning the code with an electronic smart device, the virtual debit card is created and stored on the electronic smart device.

11. The system according to any one of claims 8 to 10, wherein the bearer card has a value equal to a total of prizes assigned to multiple winning lottery tickets presented by the player for redemption.

12. The system according to any one of claims 8 to 11, comprising a personalized digital account for the player that indicates a running balance of an amount remaining on the virtual debit card.

13. The system according to claim 12, wherein the virtual debit card is sponsored by a third-party financial services provider and the personalized digital account is enabled by a mobile application provided by a lottery provider, the mobile application linked to the third-party financial services provider.

14. The system according to claim 13, wherein the mobile application is configured to generate a code that is linked to the virtual debit card, wherein the code enables the player to purchase additional lottery tickets that are charged directly against the virtual debit card by presenting the code at time of purchase of the additional lottery tickets.

15. The system according to claim 14, wherein the player is provided with an incentive to use the mobile application and the code to purchase the additional lottery tickets.
